# EUROPÄISCHE PATENTSCHRIFT

(11) **EP 1 651 380 B1**
(45) Veröffentlichungstag und Bekanntmachung des Hinweises auf die Patenterteilung: **10.05.2017**
(21) Anmeldenummer: 04766357.0
(22) Anmeldetag: 29.07.2004
(51) Int. Cl.: B23K 26/38, F01D 5/18

(54) **PARAMETRISCHE HERSTELLUNG VON KÜHLBOHRUNGEN**
PARAMETRIC PRODUCTION OF COOLING BORES
REALISATION PARAMETRIQUE D'ORIFICES DE REFROIDISSEMENT

(30) Priorität: 04.08.2003 DE 10335657
(43) Veröffentlichungstag der Anmeldung: 03.05.2006
(73) Patentinhaber: General Electric Technology GmbH, 5400 Baden (CH)
(72) Erfinder: LUKETIC, Ivan, CH-5417 Untersiggenthal (CH); WALZ, Ralf, 77948 Heiligenzell (DE)
(74) Vertreter: Bernotti, Andrea
(86) Internationale Anmeldenummer: PCT/EP2004/051648
(87) Internationale Veröffentlichungsnummer: WO 2005/014224

(56) Entgegenhaltungen:
- EP-A- 0 365 195
- EP-A- 0 950 463
- EP-A- 1 286 020
- US-A1- 2003 052 104
- US-A1- 2003 127 438

## Beschreibung

Die Erfindung betrifft ein Verfahren zur parametrischen Herstellung einer Bohrung in einem Bauteil, insbesondere zur parametrischen Herstellung einer Kühlbohrung in einem Bauteil einer Gas- oder Dampfturbine, vorzugsweise in einer Schaufel einer Gas- oder Dampfturbine. Ferner betrifft die Erfindung eine Bohrvorrichtung insbesondere zur Durchführung des Verfahrens sowie ein Verfahren zur Herstellung eines Bauteils, in dem eine oder mehrere Bohrungen verfahrensgemäß eingebracht sind.

### Stand der Technik

Um hohe Wirkungsgrade bei gleichzeitig hoher spezifischer Leistung zu erzielen, werden Gasturbinen heutzutage mit einer sehr hohen Turbineneintrittstemperatur betrieben. Oftmals überschreitet die Temperatur der aus der Brennkammer austretenden und in die Turbine eintretenden heißen Fluidströmung die zulässige Materialtemperatur der Turbinenbeschaufelung. Um dennoch einen sicheren und langlebigen Betrieb der Gasturbine zu ermöglichen, ist es erforderlich, die Schaufeln der Turbine und häufig auch die Schaufelfüße und die Gehäusewandung zu kühlen. Eine sehr effektive Kühlmethode stellt hierbei die Filmkühlung dar, bei der versucht wird, das zu kühlende Bauteil an den zu kühlenden Stellen mit einem Kühlfluidfilm zu bedecken und so gegenüber dem heißen Gas abzuschirmen. Zum Aufbringen des Kühlfluidfilms wird üblicherweise Kühlfluid, beispielsweise Kühlluft, die aus einer vorhergehenden Verdichterstufe abgezweigt wurde, über Kühlkanäle ins Innere der zu kühlenden, innen hohl ausgebildeten Schaufel und von hier aus über eine Vielzahl von Kühlbohrungen auf die Außenseite der Schaufel geführt. Das aus den Kühlbohrungen austretende Kühlfluid wird beim Austritt aus den Kühlbohrungen von der über die Schaufel strömenden Heißgasströmung so umgelenkt und aufgeweitet, daß es einen Kühlfilm längs der Schaufelwand bildet. Der Kühlfilm verhindert, daß heißes Gas unmittelbar mit der Schaufel in Berührung kommt.
Der Ausbildung des Kühlfluidfilms kommt hierbei eine zentrale Bedeutung für die Wirkung der Kühlung zu. Strömt das Kühlfluid in einem zu steilen Winkel aus der Kühlbohrung, so tritt es zu weit in die Heißgasströmung ein, bevor es zur Schaufelwand hin umgelenkt wird. Als Folge bilden sich unmittelbar stromab der Kühlbohrung verstärkt Wirbel aus, die dazu führen, daß Heißgas an die Schaufelwand gelangt. Die Kühleffektivität sinkt insbesondere lokal und es kann zu sogenannten 'Hot-Spots' der Schaufel, d.h. zu lokalen Materialüberhitzungen der Schaufel, kommen. Hot-Spots können zu einer Beschädigung oder sogar Zerstörung der Schaufel führen. Hot-Spots können aber auch entstehen, wenn die austretende Kühlfluidströmung nicht ausreichend aufgeweitet wird, um auch den Zwischenbereich bis zu dem Kühlfluid, das aus einer benachbarten Kühlbohrung austritt, hinreichend abzudecken. Gleiches gilt auch, wenn zu wenig Kühlfluid aus einer Kühlbohrung austritt.
Die Strömung des Kühlfluids durch eine Kühlbohrung und die anschließende Ausbildung zu einem an der Schaufelwand anliegenden Kühlfluidfilm wird erheblich von der Strömungsführung durch die Kühlbohrung bestimmt. Treten hier beispielsweise infolge von bei der Fertigung entstandener Materialgrate zu hohe Strömungsverluste des Kühlfluides auf, so strömt zu wenig Kühlfluid durch die Kühlbohrung. Um eine optimale Abströmung des Kühlfluides beim Austritt aus der Kühlbohrung zu ermöglichen, ist die Kühlbohrung im Austrittsbereich oftmals als Diffusor mit einem nichtkreisfömigen Austrittsquerschnitt ausgebildet Entspricht hier jedoch beispielsweise der Diffusoröffnungswinkel oder die nichtkreisförmige Aufweitung nicht den geometrischen Vorgaben, so kann es zu einer Fehlabströmung des Kühlfluids mit den oben beschriebenen Folgen kommen. Überdies ist es erforderlich, eine Vielzahl von Kühlbohrungen einer Schaufel so aufeinander abzustimmen, daß sich ein möglichst geschlossener, die Schaufel umhüllender Kühlfluidfilm einstellt.

Um beispielsweise in Turbinenschaufeln einer Gasturbine oder auch anderen Bauteilen Kühlbohrungen anzubringen, sind im Stand der Technik vielfältige Bohrungsverfahren bekannt. So können solche Bohrungen beispielsweise mittels einem wie in der US-Patentschrift US-A-4 197 443 beschriebenen Erodierverfahren hergestellt werden. Neben den hohen Herstellungskosten hat ein solches Erodierverfahren den Nachteil, daß bereits kleine Oberflächentoleranzen zu stark unterschiedlichen Öffnungsverhältnissen der einzelnen Bohrungen führen. Ein anderes, weit verbreitetes Verfahren zum Herstellen von Kühlbohrungen in Bauteilen ist das Laserbohren. Hier unterscheidet man in das Percussionsbohren, bei dem mit einer Reihe von Laserpulsen zylindrische Bohrungen hergestellt werden können. Beim Trepanierbohren andererseits wird ein fein fokussierter Laserstrahl relativ zum Werkstück bewegt und so die Bohrung ausgeschnitten. Hiermit lassen sich auch Bohrungen mit nichtkreisförmigen Querschnitten herstellen.
Um beim Herstellen der Bohrung insbesondere Verletzungen der Bohrung in den Übergangsbereichen von kreisförmigem Querschnitt auf nichtkreisförmigen Querschnitt zu vermeiden, wurden verschiedene Verfahren entwickelt. In der US-Patentschrift US-A-5 609 779 wird ein Laserstrahl innerhalb einiger weniger Laserpulse von der Mittellinie der Öffnung beschleunigt zur Kante des Diffusors geführt. Die mit diesem Verfahren hergestellten Diffusoren fallen jedoch sehr unterschiedlich aus.
In der europäischen Offenlegungsschrift EP 0 950 463 A1 ist ein weiteres Verfahren zur Herstellung einer nichtkreisförmigen Kühlbohrung beschrieben, wobei sich die Kühlbohrung in Strömungsrichtung aus einem kreisförmigen Zuführabschnitt und einem nichtkreisförmigen Diffusorabschnitt zusammensetzt Um eine Verletzung des Zuführabschnitts beim Bohren des Diffusorabschnitts zu vermeiden, wird nach Festlegung der geometrischen Abmessungen der Abschnitte zunächst eine Durchgangsbohrung mit einer Querschnittsfläche innerhalb der Querschnittsfläche des Zuführabschnitts erzeugt und anschließend der Diffusorabschnitt mit einem Strahlbohrverfahren so ausgeschnitten, daß der Bohrstrahl im Bereich des Zuführabschnitts im wesentlichen innerhalb derselben Querschnittsfläche bleibt.

In allen aus dem Stand der Technik bekannten Verfahren wird zur Festlegung der jeweiligen Bohrungstiefe für beispielsweise den Zuführabschnitt von der durch die Konstruktion bestimmten Wandungsdicke an derjenigen Stelle, an der die Bohrung anzubringen ist, ausgegangen. Die Geometrieabmessungen werden üblicherweise entweder in absoluten Abmessungen oder in relativen Abmessungen bezogen auf die ideale, durch die Konstruktion bestimmten Wanddungsdicke angegeben und in einer Bohrsteuerung zur Steuerung des Bohrwerkzeugs verarbeitet. Weicht jedoch die reale Wanddicke an dieser Stelle von der idealen Wanddicke ab, so kommt es auch zu Abweichungen der Geometrien der realen Kühlbohrung von der idealen Kühlbohrung und infolgedessen auch bereits bei Abweichungen der Wanddicke innerhalb der Fertigungstoleranzen zu teilweise erheblichen Veränderungen der Durchflußcharakteristik der Kühlbohrung. So kann beispielsweise der kreisförmige, zylindrische Anteil der Bohrung zu lang ausfallen, wodurch der Eintrittsbereich des Zuführabschnitts im Vergleich zu dem idealen Eintrittsbereich verändert wird oder der Eintrittsbereich sogar beschädigt wird. Hierdurch kommt es zu einer Änderung des Kühlfluiddurchflusses im Vergleich zu dem vorgesehenen Durchfluß. Fällt umgekehrt der Zuführabschnitt zu kurz aus, so kommt zu einer Verminderung der Druckverluste der Kühlfluidströmung in dem Zuführabschnitt und somit zu einem vermehrten und unkontrollierten Ausströmen der Kühlluft aus der betroffenen Kühlbohrung. Wird der Diffusor nur unvollständig hergestellt, so beeinflusst dies unmittelbar das Abströmverhalten.

### Darstellung der Erfindung

Der Erfindung liegt somit die Aufgabe zugrunde, ein Verfahren zur Herstellung einer Bohrung in einem Bauteil zur Verfügung zu stellen, wobei die mit dem Verfahren hergestellte Bohrung auch bei Abweichung der realen von der idealen Wandungsdicke einer vorbestimmten, idealen Durchflußcharakteristik entsprechen soll. Das Verfahren soll zur Herstellung einer Kühlbohrung in einem Bauteil einer Gas- oder Dampfturbine, vorzugsweise in einer Schaufel einer Gas- oder Dampfturbine, geeignet sein. Ferner ist es eine Aufgabe der Erfindung, eine Bohrvorrichtung zur Durchführung eines solchen Verfahrens zur Verfügung zu stellen.

Diese Aufgaben werden erfingdungsgemäß durch das Verfahren zur parametrischen Herstellung einer Bohrung in einem Bauteil gemäß Anspruch 1 sowie durch die Bohrvorrichtung gemäß Anspruch 9 sowie dem Verfahren zur Herstellung eines Bauteils gemäß Anspruch 12 gelöst Weitere vorteilhafte Ausgestaltungen der Erfindung finden sich in den Unteransprüchen.

Das erfindungsgemäße Verfahren zur parametrischen Herstellung einer Bohrung in einem Bauteil, umfaßt die folgenden Verfahrensschritte:
a) Messen einer realen Wandungsdicke des Bauteils an derjenigen Stelle, an der die Bohrung einzubringen ist;
b) Ermittlung zumindest eines parametrischen Bohrungsgeometriewertes auf der Basis eines Abgleichs der gemessenen, realen Wandungsdicke mit einer angenommenen, idealen Wandungsdicke;
c) Herstellen der Bohrung gemäß dem zumindest einen ermittelten parametrischen Bohrungsgeometriewert.

Das erfindungsgemäße Verfahren eignet sich insbesondere zur parametrischen Herstellung einer Kühlbohrung in einem Bauteil einer Gas- oder Dampfturbine, vorzugsweise in einer Schaufel einer Gas- oder Dampfturbine oder auch im Schaufelfuß oder Gehäuse.
Im Unterschied zu aus dem Stand der Technik bekannten Verfahren wird bei dem erfindungsgemäßen Verfahren vor der eigentlichen Herstellung der Bohrung die reale Wandungsdicke des Bauteils an derjenigen Stelle, an der die Bohrung einzubringen ist, gemessen. Hierdurch können Schwankungen der realen Wandungsdicke, die beispielsweise infolge des Materialschrumpfens beim Gießvorgang nicht exakt vorgebbar sind und von der idealen, konstruktiv vorgegebenen Wandungsdicke in einem Toleranzbereich streuen, bei der sich an den Meßvorgang anschließenden Herstellung der Bohrung berücksichtigt werden. Ein oder mehrere Bohrungsgeometriewerte können somit unter Berücksichtigung der realen Gegebenheiten vor der eigentlichen Herstellung der Bohrung so angepaßt werden, daß die Bohrung eine genau vorbestimmte Durchfluß- und/oder Ausströmcharakteristik für ein durch die Bohrung strömendes Fluid aufweist. Nach dem Messen der realen Wandungsdicke wird die gemessene, reale Wandungsdicke mit der vorgegebenen, idealen Wandungsdicke abgeglichen und aus dem Abgleichergebnis zumindest ein parametrischer Bohrungsgeometriewert ermittelt. Hierzu ist es vorteilhaft, den Bohrungsgeometriewert mit Hilfe einer einfachen, zuvor festgelegten, funktionalen Beziehung aus dem Abgleichergebnis zu bestimmen. Der ermittelte Bohrungsgeometriewert dient dann als Parameter zur parametrischen Herstellung der Bohrung und wird hierzu beispielsweise unmittelbar einer Bohrwerkzeugsteuerung, beispielsweise der Steuerung eines Lasers, vorgegeben.

Zweckmäßig wird die reale Wandungsdicke des Bauteils in Verfahrensschritt a mittels einer Wirbelstrommessung gemessen. Bauteildickenmessungen mittels Wirbelstrom liefern bei vergleichsweise geringem Aufwand hinreichend genaue Dickenergebnisse.

Zur Ermittlung des parametrischen Bohrungsgeometriewertes wird in Verfahrensschritt b vorzugsweise zunächst ein Differenzwert aus angenommener, idealer Wandungsdicke und gemessener, realer Wandungsdicke ermittelt und anschließend der Bohrungsgeometriewert ausgehend von zumindest einem Vorgabewert unter Berücksichtigung des Differenzwertes ermittelt. Beispielsweise kann der Vorgabewert unmittelbar proportional zum ermittelten Differenzwert verändert werden. Für die meisten Anwendungsfälle genügt eine solche Korrelation, um mit hinreichend hoher Genauigkeit eine vorbestimmte Durchströmcharakteristik zu erzielen. Gleichzeitig wird der rechnerische Aufwand zur Ermittlung des parametrischen Bohrungsgeometriewertes hierbei sehr gering gehalten. In einer Alternativberechnung kann aber auch zunächst ein Verhältnis aus realer und idealer Wandungsdicke gebildet werden und anschließend der Bohrungsgeometriewert oder die Bohrungsgeometriewerte proportional zu dem ermittelten Verhältnis verändert werden.
Der Vorgabewert kann ein absoluter Wert sein und unmittelbar in Abhängigkeit des Differenzwertes verändert werden. Alternativ kann der Vorgabewert aber auch ein relativer, auf die Wandungsdicke bezogener Wert sein und um einen Wert verändert werden, der proportional zu dem Differenzwert ist In letzterem Fall ist die Vorgehensweise zunächst unabhängig von der absoluten Wandungsdicke. Es können somit Bohrungsgeometriewerte für unterschiedlich dicke Wandungen mit ein und demselben Ermittlungsalgorithmus berechnet werden. In beiden Fällen ist der rechnerische Aufwand zur Ermittlung des Bohrungsgeometriewertes vorteilhaft jeweils nur gering.

Im Falle einer herzustellenden Kühlbohrung eines Bauteils einer Gas- oder Dampfturbinen, beispielsweise einer Schaufel einer Gas- oder Dampfturbine, umfaßt die Bohrung in Strömungsrichtung des Kühlfluids einen Eingangsabschnitt, einen Zuleitungsabschnitt und einen Diffusorabschnitt. Der Eingangsabschnitt ist hierbei der Bereich, der an ein Kühlfluidreservoir oder eine Kühlfluidzuleitung, die im Inneren des Bauteils oder der Schaufel angeordnet ist, angrenzt. Turbinenschaufeln sind beispielsweise zumeist innen hohl ausgeführt. Der Eingangsabschnitt ist somit derjenige Bereich, der unmittelbar an den Hohlraum angrenzt. Je nach Beschaffenheit des Eingangsabschnitts bildet sich in der Kühlbohrung eine laminare oder turbulente Kühlfluidströmung aus, was sich unmittelbar auf den Durchsatz durch die Kühlbohrung auswirkt Der sich an den Eingangsabschnitt anschließende Zuleitungsabschnitt ist zumeist zylindrisch ausgebildet und verbindet den Eingangsabschnitt mit dem Diffusorabschnitt. Zuleitungsabschnitt und Eingangsabschnitt werden oftmals auch als Zuführabschnitt der Kühlbohrung bezeichnet. Der sich in Strömungsrichtung des Kühlfluids an den Zuleitungsabschnitt anschließende Diffusorabschnitt erstreckt sich bis zur Außenseite der Schaufel. Der Querschnitt des Diffusorabschnitts ist üblicherweise nichtkreisförmig mit einer seitlichen Aufweitung, so daß der Kühlfluidstrom eine flächige Aufweitung erfährt. Zweckmäßig wird hier als Bohrungsgeometriewert die als Vorgabewert vorgegebene Länge des Zuleitungsabschnittes um den in Bohrungsrichtung projizierten Differenzwert verändert. Die Projektion berücksichtigt hierbei die Neigung der Bohrung in Bezug auf die Dickenrichtung der Wandung. Hierdurch wird dafür gesorgt, daß auch bei von der idealen Wandungsdicke abweichender realer Wandungsdicke insbesondere der Diffusorabschnitt und zweckmäßig auch der Eingangsabschnitt bei der Herstellung im Vergleich zu den idealen Vorgabewerten weder gestaucht noch gestreckt werden. Die Abweichung der Dicke der realen Wandung von der idealen Wandung ist vollständig durch die Längenanpassung des Zuleitungsabschnitts berücksichtigt. Die Durchflusscharakteristik sowie auch die Abströmcharakteristik der Kühlbohrung entsprechen somit mit sehr guter Genauigkeit den idealen Vorgabewerten.
Ergänzend oder auch alternativ kann hier auch der Durchmesser des Querschnittes des Zuleitungsabschnittes in Abhängigkeit des Differenzwertes als Bohrungsgeometriewert verändert werden. Hierdurch steigt die Genauigkeit der Übereinstimmung der realen mit den vorgegebenen Charakteristiken.

In einer besonders vorteilhaften Ausführung wird das Verfahren vollautomatisch durchgeführt. Die gemessenen Werte sowie auch die Ergebniswerte des Abgleichs als auch die ermittelten Bohrungswerte werden hierzu jeweils vorteilhaft vollautomatisch von einer Meßeinheit an eine Berechnungseinheit und von hier an eine Steuereinheit zur Steuerung eines Bohrwerkzeugs übergeben. Eine Vollautomatisierung des Verfahrens ermöglicht eine zeit- und kosteneffiziente Fertigung von beispielsweise Turbinenschaufeln mit jeweils einer Vielzahl von nebeneinander auf der Schaufeloberfläche angeordneten Kühlbohrungen.
Hierzu wird vorteilhaft nach Durchlaufen der Verfahrensarbeitsschritte a bis c zur Herstellung einer ersten Bohrung das Verfahren zur Herstellung einer weiteren Bohrung oder mehrerer weiterer Bohrungen in dem Bauteil einmal oder mehrmals wiederholt.

In einem weiteren Aspekt der Erfindung wird eine Bohrvorrichtung zur Durchführung des oben beschriebenen, erfindungsgemäßen Verfahrens zur parametrischen Herstellung einer Bohrung in einem Bauteil zur Verfügung gestellt. Die erfindungsgemäße Bohrvorrichtung umfasst hierzu eine Meßeinheit zur Messung einer Wandungsdicke des Bauteils, eine Berechnungseinheit zum Durchführen eines Abgleichs der gemessenen, realen Wandungsdicke mit einer angenommenen, idealen Wandungsdicke und zur Ermittlung zumindest eines parametrischen Bohrungsgeometriewertes auf der Basis des Abgleichs, eine Steuereinheit zur Steuerung einer Bohreinheit sowie eine Bohreinheit zum Einbringen von Bohrungen in dem Bauteil.
Besonders vorteilhaft umfaßt die Bohreinheit einen Laserbohrer. Zur Herstellung von Kühlbohrungen kann vorteilhaft beispielsweise eines der in der Patentanmeldeschrift EP 0 950 463 A1 beschriebenen Strahlbohrverfahren eingesetzt werden. Als Strahlbohrverfahren eignet sich hier insbesondere ein Laserbohrverfahren, vorzugsweise ein gepulstes Laserbohrverfahren. So kommt hier beispielsweise ein gepulster Nd:YAG-Laser oder ein gepulster CO₂-Laser zum Einsatz. Jedoch liegt auch die Verwendung anderer Bohrstrahlen, etwa eines Wasserstrahls, im Rahmen der Erfindung.

Insbesondere um den Vorgang des Bohrens vollautomatisch ablaufen zu lassen, umfaßt die Bohrvorrichtung zusätzlich zweckmäßig eine Greif- und Positioniereinheit, um das zu bearbeitende Bauteil zu greifen und vorzugsweise vollautomatisch gemäß dem jeweils durchzuführenden Bearbeitungsschritt zu positionieren.

In einem weiteren Aspekt stellt die Erfindung ein Verfahren zur Herstellung eines Bauteils für die Anwendung als Schaufel einer Gas- oder Dampfturbine, zur Verfügung, wobei mindestens eine Bohrung dieses Bauteils unter Verwendung des oben beschriebenen Verfahrens hergestellt wird. Im Unterschied zu den aus dem Stand der Technik bekannten Bauteilen, insbesondere zu den aus dem Stand der Technik bekannten Turbinenschaufeln, sind jeweils ein oder mehrere Bohrungswerte einer jeden Bohrung in Abhängigkeit der jeweiligen Wandungsdicke des Bauteils an genau der Stelle der Bohrung optimiert. So können beispielsweise bei Kühlbohrungen die Längen der Zuführabschnitte den jeweils lokalen Wandungsdicken angepaßt sein, so daß die Bohrungen somit gewünschte Durchfluß- und Abströmcharaketristika aufweisen ohne die bisher übliche Streubreite infolge fertigungsbedingter Geometrieschwankungen.

### Kurze Beschreibung der Zeichnungen

Die Erfindung wird nachfolgend anhand von Ausführungsbeispielen im Zusammenhang mit den Zeichnungen näher erläutert Es zeigen:
- Figur 1: in schematischer Darstellung ein Ablaufschema eines aus dem Stand der Technik bekannten Verfahrens zur Herstellung von Bohrungen;
- Figur 2a: einen Querschnitt durch eine Wand einer Turbinenschaufel mit einer Kühlbohrung;
- Figur 2b: eine Draufsicht auf die Kühlbohrung aus Figur 2a;
- Figur 3: in schematischer Darstellung ein Ablaufschema des erfindungsgemäßen Verfahrens zur parametrischen Herstellung von Bohrungen, insbesondere von Kühlbohrungen.

In den Figuren sind nur die für das Verständnis der Erfindung wesentlichen Elemente und Bauteile dargestellt.

Gleiche oder gleichwirkende Bauteile sind weitgehend mit denselben Bezugszeichen versehen.

### Wege zur Ausführung der Erfindung

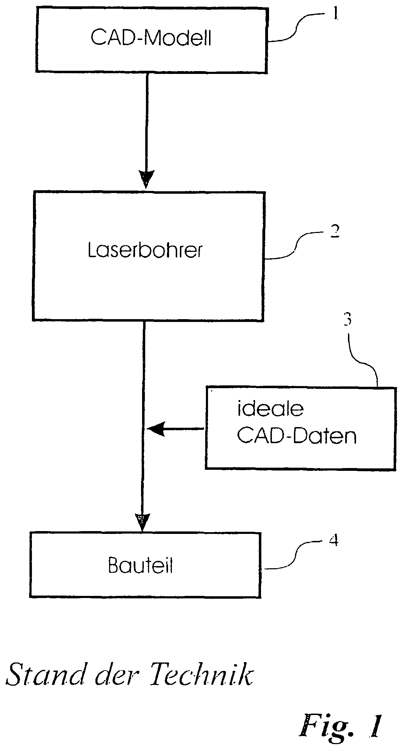

In Figur 1 ist in schematischer Darstellung ein Ablaufschema eines aus dem Stand der Technik bekannten Verfahrens zur Herstellung von Bohrungen dargestellt Ausgehend von einem CAD-Modell 1 werden die für die Herstellung der Bohrung erforderlichen Bohrungsgeometriewerte 3 in eine Steuerung eines Bohrwerkzeugs, beispielsweise eines Laserbohrers 2, eingegeben oder eingelesen. Anschließend wird mit dem Bohrwerkzeug auf der Basis dieser Bohrungswerte die Bohrung in dem Bauteil 4 hergestellt. Abweichungen der realen Abmessungen des Bauteils von den idealen, in dem CAD-Modell vorgegebenen Abmessungen werden hierbei nicht zusätzlich berücksichtigt. Dies kann dazu führen, daß die Geometrieabmessungen der real hergestellten Bohrung von der idealen Bohrung abweichen und hierdurch auch die Durchfluß- und Abströmcharakteristiken der real hergestellten Bohrung von der idealen Bohrung abweichen.

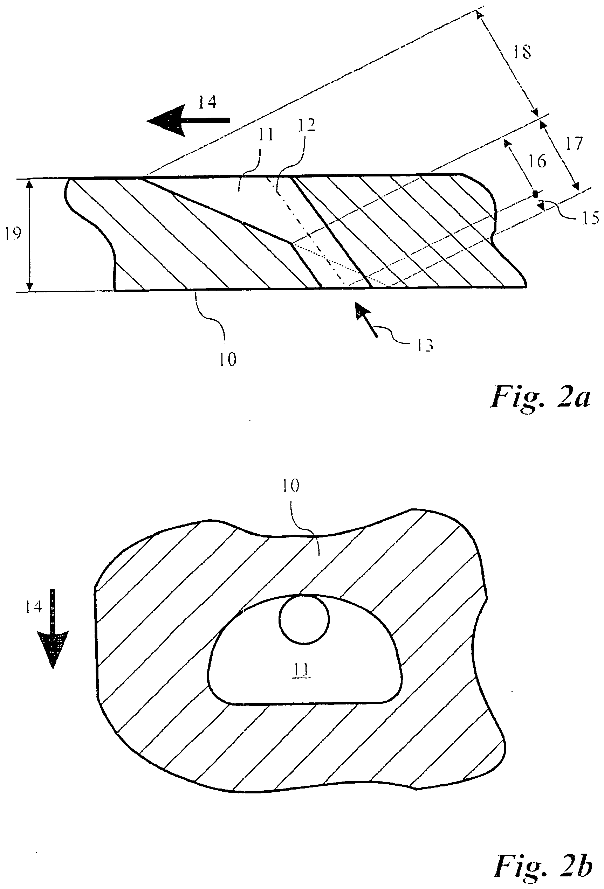

Figur 2 zeigt einen Querschnitt durch eine Wand 10 einer Turbinenschaufel mit einer in die Wand eingebrachten Kühlbohrung 11. Die hier dargestellte Turbinenschaufel ist innen hohl ausgeführt. Der Hohlraum in der Turbinenschaufel wird als Kühlfluidreservoir genutzt, das über Zuleitungen aus einer der vorderen Verdichterstufen mit Kühlluft gespeist wird. Auf der Außenseite der Turbinenschaufel strömt im Betrieb die heiße, aus der Brennkammer kommende Fluidströmung gemäß dem Strömungspfeil 14.
Die Kühlbohrung 11 unterteilt sich in Strömungsrichtung 13 eines durch die Kühlbohrung strömenden Kühlfluids in einen Eingangsabschnitt 15, einen sich hieran anschließenden Zuleitungsabschnitt 16 und einen sich an den Zuleitungsabschnitt anschließenden Diffusorabschnitt 18. Der Eingangsabschnitt 15 und der Zuleitungsabschnitt 16 können auch, wie hier dargestellt, als Zuführabschnitt 17 zusammengefaßt sein und einen konstanten Querschnitt aufweisen. Die jeweils senkrecht zur Bohrungsachse 12 zu betrachtenden Querschnitte des Zuleitungsabschnitts 16 und des Eingangsabschnittes 15 sind in den meisten Anwendungsfällen, wie auch hier dargestellt, kreisförmig, da kreisförmige Bohrungsquerschnitte fertigungstechnisch einfacher herstellbar sind als nichtkreisförmige Bohrungsquerschnitte. Auch bleibt hier der Radius der Bohrung im Bereich des Zuleitungsabschnittes 16 und des Eingangsabschnittes 15 konstant, d.h. der gesamte Zuführabschnitt 17 der Kühlungsbohrung 11 ist hier zylinderförmig ausgebildet. Es kann jedoch aber auch zweckmäßig sein, den Eingangsbereich 15 mit einem nichtkreisförmigen Querschnitt oder auch sich aufweitend oder düsenförmig auszuführen, um das Kühlfluid in gewünschter Weise aus dem angrenzenden Reservoir in die Kühlbohrung 11 zu führen. Der Diffusorabschnitt 18 weist hier in Figur 2 einen nichtkreisförmigen, sich zum Austritt hin aufweitenden Querschnitt auf, um so im Betrieb bereits in der Kühlbohrung 11 eine Aufweitung als auch eine Verlangsamung des durch die Bohrung geführten Kühlfluidstrahls zu erzielen. Der aus der Kühlbohrung austretende Kühlfluidstrahl wird infolgedessen im Zusammenspiel mit der Hauptströmung einerseits besser zur Schaufelwandung umgebogen und überdeckt andererseits infolge der Aufweitung einen breiteren Bereich der Schaufelwandung stromab der Kühlbohrung. Dies führt insgesamt zu einer verbesserten Ausbildung eines Kühlfilms auf der Schaufelaußenseite der Turbinenschaufel und somit zu einer besseren Kühlung als dies ohne Diffusorabschnitt der Fall wäre.
Die in Figur 2 dargestellte Wandung 10 weist eine Nominaldicke 19 auf, die einem Wert eines konstruktiv festgelegten und strömungsmechanisch optimierten CAD-Modells entspricht. Auf der Basis dieser Nominaldicke 19 wurden die Abmessungen der Kühlbohrung 11 in der Konstruktionsphase so festgelegt, daß sich unter Berücksichtigung aller erforderlicher Randparameter über einen weiten Betriebsbereich der Gasturbine ein weitgehend optimaler Kühlfluidstrom durch die Kühlbohrung und beim Austritt des Kühlfluids aus der Kühlbohrung ein optimaler Kühlfilm auf der Außenseite der Schaufel ausbildet. Weicht jedoch die reale Wandungsdicke der Turbinenschaufel beispielsweise infolge von Fertigungstoleranzen von dieser vorbestimmten Wandungsdicke ab, so weicht auch die Geometrie der real hergestellten Bohrung von der idealen Bohrung ab. So kann dies beispielsweise dazu führen, daß der Zuführabschnitt 16 im Vergleich zu einer idealen Ausführung zu lang oder zu kurz ausfällt oder der Diffusor 18 zu lang oder zu kurz oder auch mit einem veränderten Diffusoröffnungswinkel ausgeführt ist. In allen Fällen führt dies zu einer Veränderung der Strömungsverhältnisse des Kühlfluids durch die Kühlbohrung mit einem entweder höheren oder geringeren Massendurchsatz oder einer verschlechterten Aufweitung des Kühlfluidstrahls beim Austritt aus der Kühlbohrung. Da die Auslegung der Kühlbohrung im Hinblick auf optimale Kühleffektivität ausgelegt wurde, führt jede Veränderung der realen zur idealen Geometrie der Kühlbohrung zu einer Verschlechterung der Kühleffektivität.

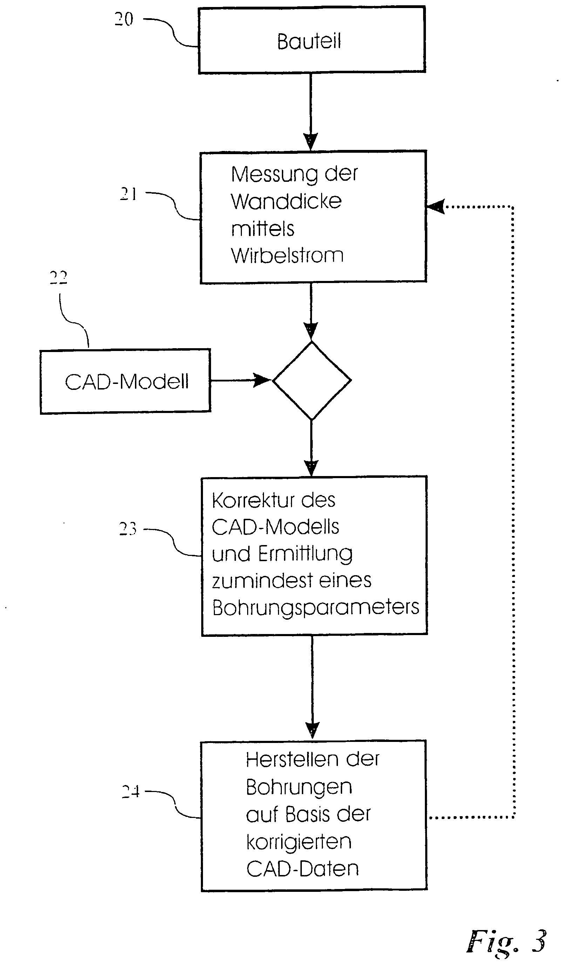

Um Abweichungen der real ausgeführten Wandungsdicke zu ideal vorgegebenen Wandungsdicken bei der Herstellung von Bohrungen zu berücksichtigen, sieht die Erfindung, wie in dem in Figur 3 schematisch dargestellten Ablaufschema wiedergegeben, in einem ersten Verfahrensschritt 21 vor, die reale Wandungsdicke des Bauteils 20 an derjenigen Stelle, an der die Bohrung einzubringen ist, zu messen. Ausgehend von dem gemessenen Wert erfolgt in einem weiteren Verfahrensschritt 23 ein Abgleich der gemessenen, realen Wandungsdicke mit der angenommenen, idealen Wandungsdicke. Die aus der Konstruktion stammenden CAD-Daten des idealen Bauteils bzw. der idealen Bohrung, die hier als Eingabegrößen vorgegeben werden (siehe Bezugszeichen 22), werden hier somit auf Basis der real vorliegenden Wandungsdicke korrigiert. Das Ergebnis des Abgleichs dient in Verfahrensschritt 23 zur Ermittlung zumindest eines Bohrungsgeometriewertes, der dann der Steuerung eines geeigneten Bohrers, beispielsweise eines Laserbohrers, übergeben wird. Die Bohrung wird dann in einem weiteren Schritt 24 gemäß dem als Bohrungsparameter ermittelten Bohrungsgeometriewert hergestellt.
Mit dem in Figur 3 dargestellten Verfahren kann auch eine Vielzahl von Bohrungen in einem Bauteil hergestellt werden, wobei für jede herzustellende Bohrung die Verfahrensschritte 21 bis 24 abzuarbeiten sind. In Figur 3 ist eine solche Herstellung einer Vielzahl von Bohrungen in einem Bauteil mittels der gestrichelt dargestellten Rücksprunglinie von Verfahrensschritt 24 zu Verfahrensschritt 21 wiedergegeben.
Die Messung der Wandungsdicke 21 erfolgt vorliegend beispielsweise mittels einer Wirbelstrommessung. Das Meßergebnis wird nach erfolgter Messung zur Durchführung des Verfahrensschritts 23 einer Berechnungseinheit, beispielsweise einer CPU, zugeführt, um hier zumindest einen für die Bohrung zu berücksichtigenden Bohrungsgeometriewert zu ermitteln. So kann hier beispielsweise als Bohrungsgeometriewert die als Vorgabewert vorgegebene Länge des Zuleitungsabschnittes um den in Bohrungsrichtung projizierten Differenzwert verändert werden. Dies bedeutet, daß der Zuleitungsabschnitt zum Ausgleich der Differenz der realen Wandungsdicke zur idealen Wandungsdicke entweder entsprechend länger oder kürzer ausgeführt wird. Die Projektion des Differenzwertes erfolgt hierzu in Richtung der Bohrungsachse, um den Neigungswinkel der Bohrung zu berücksichtigen. Somit ist sichergestellt, daß die Geometrie des real hergestellten Diffusorabschnitts der idealen, vorgegebenen Diffusorgeometrie entspricht, so daß sich hier im Betrieb die vorbestimmten und optimierten Strömungsverhältnisse des durch die Kühlbohrung strömenden Kühlfluides einstellen.
Um die Veränderung von Strömungsverlusten in dem Zuleitungsabschnitt aufgrund der Abweichung der realen von der idealen Geometrie zu berücksichtigen, kann es auch von Vorteil sein, den Durchmesser des Querschnittes des Zuleitungsabschnittes und/oder auch den Querschnittsverlauf des Diffusors als einen oder mehrere weitere Bohrungsgeometriewerte in Abhängigkeit des Differenzwertes zu verändern. Wird beispielsweise der Zuleitungsabschnitt länger ausgeführt, so kann auch der Querschnitt des Zuleitungsabschnitts vergrößert werden, um zusätzliche, aufgrund der größeren Länge des Zuleitungsabschnitts zusätzlich auftretende Strömungsverluste auszugleichen. Wird umgekehrt der Zuleitungsabschnitt verkürzt, so kann es vorteilhaft sein, den Querschnitt zu verkleinern.
Die Bohrungsgeometriewerte lassen sich hierzu zweckmäßig mittels einfacher, vorgegebener Korrelationen, vorzugsweise anhand proportionaler Funktionen, aus dem Differenzwert ermitteln und an die Steuerung des Bohrwerkzeugs übergeben.

### Bezugszeichenliste

| | | |
|---|---|---|
| 1 - 4 | Verfahrensschritte des aus dem Stand der Technik bekannten Verfahrens zur Herstellung von Bohrungen *[steps of a method for drilling holes as known in the state of the art]* | |
| | | |
| 10 | Bauteilwandung | *[wall of component]* |
| 11 | Bohrung | *[drilled hole]* |
| 12 | Achse der Bohrung | *[centre line of drilled hole]* |
| 13 | Durchströmrichtung der Bohrung | *[flow through drilled hole]* |
| 14 | Strömungsrichtung der Hauptströmung | *[mainstream flow]* |
| 15 | Eingangsabschnitt | *[inlet section]* |
| 16 | Zuleitungsabschnitt | *[feeding section]* |
| 17 | Zuführabschnitt | *[supply section]* |
| 18 | Diffusorabschnitt | *[diffuser section]* |
| | | |
| 20 - 24 | Verfahrensschritte des erfindungsgemäßen Verfahrens zur Herstellung von Bohrungen *[steps of the method for drilling holes according to the invention]* | |

## Patentansprüche

1. Verfahren zur parametrischen Herstellung einer Bohrung in einem Bauteil, zur parametrischen Herstellung einer Kühlbohrung (11) in einem Bauteil einer Gas- oder Dampfturbine, vorzugsweise in einer Schaufel (10) einer Gas- oder Dampfturbine, **dadurch gekennzeichnet, dass** das Verfahren die nachfolgenden Verfahrensschritte (21, 23, 24) umfasst:
a) Messen einer realen Wandungsdicke des Bauteils an derjenigen Stelle, an der die Bohrung einzubringen ist;
b) Ermittlung zumindest eines parametrischen Bohrungsgeometriewertes auf der Basis eines Abgleichs der gemessenen, realen Wandungsdicke mit einer angenommenen, idealen Wandungsdicke;
c) Herstellen der Bohrung gemäss dem zumindest einen ermittelten parametrischen Bohrungsgeometriewert.

2. Verfahren nach Anspruch 1, **dadurch gekennzeichnet, dass** die reale Wandungsdicke des Bauteils in Verfahrensschritt a mittels einer Wirbelstrommessung gemessen wird.

3. Verfahren nach einem der vorhergehenden Ansprüche, **dadurch gekennzeichnet, dass** zur Ermittlung des parametrischen Bohrungsgeometriewertes in Verfahrensschritt b zunächst ein Differenzwert aus angenommener, idealer Wandungsdicke und gemessener, realer Wandungsdicke ermittelt wird, und anschliessend der parametrische Bohrungsgeometriewert ausgehend von zumindest einem Vorgabewert unter Berücksichtigung des Differenzwertes ermittelt wird.

4. Verfahren nach Anspruch 3, **dadurch gekennzeichnet, dass** der Vorgabewert ein absoluter Wert ist und der Vorgabewert in Abhängigkeit des Differenzwertes verändert wird.

5. Verfahren nach Anspruch 3, **dadurch gekennzeichnet, dass** der Vorgabewert ein relativer, auf die Wandungsdicke bezogener Wert ist und der Vorgabewert um einen Wert verändert wird, der proportional zu dem Differenzwert ist.

6. Verfahren nach einem der vorhergehenden Ansprüche 3 bis 5, **dadurch gekennzeichnet, dass** die Bohrung eine Kühlbohrung eines Bauteils einer Gas- oder Dampfturbinen, insbesondere eine Schaufel einer Gas- oder Dampfturbine, ist und die Bohrung in Strömungsrichtung einen Eingangsabschnitt, einen Zuleitungsabschnitt und einen Diffusorabschnitt umfasst, und dass als Bohrungsgeometriewert die als Vorgabewert vorgegebene Länge des Zuleitungsabschnittes um den in Bohrungsrichtung projizierten Differenzwert verändert wird und/oder der Durchmesser des Querschnittes des Zuleitungsabschnittes in Abhängigkeit des Differenzwertes verändert wird.

7. Verfahren nach einem der vorhergehenden Ansprüche, **dadurch gekennzeichnet, dass** das Verfahren vollautomatisch durchgeführt wird.

8. Verfahren nach einem der vorhergehenden Ansprüche, **dadurch gekennzeichnet, dass** nach Durchlaufen der Verfahrensarbeitsschritte a bis c zur Herstellung einer ersten Bohrung das Verfahren zur Herstellung einer weiteren Bohrung oder mehrerer weiterer Bohrungen in dem Bauteil wiederholt wird.

9. Bohrvorrichtung zur Durchführung des Verfahrens zur parametrischen Herstellung einer Bohrung in einem Bauteil gemäss einem der vorhergehenden Ansprüche, **dadurch gekennzeichnet, dass** eine Messeinheit zur Messung einer realen Wandungsdicke des Bauteils vorhanden ist, und dass
eine Berechnungseinheit zum Durchführen eines Abgleichs der gemessenen, realen Wandungsdicke mit einer angenommenen, idealen Wandungsdicke und zur Ermittlung zumindest eines parametrischen Bohrungsgeometriewertes auf der Basis des Abgleichs vorhanden ist.

10. Bohrvorrichtung nach Anspruch 9, **dadurch gekennzeichnet, dass** die Bohreinheit einen Laserbohrer umfasst.

11. Bohrvorrichtung nach einem der Ansprüche 9 oder 10, **dadurch gekennzeichnet, dass** die Bohrvorrichtung zusätzlich eine Greif- und Positioniereinheit umfasst, um das zu bearbeitende Bauteil zu greifen und vorzugsweise vollautomatisch gemäss dem jeweils durchzuführenden Bearbeitungsschritt zu positionieren.

12. Verfahren zur Herstellung eines Bauteils für die Anwendung als Schaufel einer Gas- oder Dampfturbine, wobei mindestens eine Bohrung dieses Bauteils unter Verwendung des Verfahrens nach einem der Ansprüche 1 bis 8 hergestellt wird.

## Claims

1. Method for parametric production of a bore in a component, for parametric production of a cooling bore (11) in a component of a gas or steam turbine, preferably in a blade (10) of a gas or steam turbine, **characterised in that** the method comprises the following method steps (21, 23, 24):
a) measurement of an actual wall thickness of the component at the point at which the bore is to be made;
b) determination of at least one parametric bore geometry value on the basis of comparison of the measured real wall thickness with an assumed ideal wall thickness;
c) production of the bore according to the at least one determined parametric bore geometry value.

2. Method according to claim 1, **characterised in that** the actual wall thickness of the component is measured in method step a) by means of an eddy current measurement.

3. Method according to one of the preceding claims, **characterised in that** to determine the parametric bore geometry value, in method step b) firstly a difference value is determined from an assumed ideal wall thickness and a measured actual wall thickness, and then the parametric bore geometry value is determined starting from at least one predefined value, taking into account the difference value.

4. Method according to claim 3, **characterised in that** the predefined value is an absolute value, and the predefined value is changed depending on the difference value.

5. Method according to claim 3, **characterised in that** the predefined value is a relative value related to the wall thickness, and the predefined value is changed by a value which is proportional to the difference value.

6. Method according to any of the preceding claims 3 to 5, **characterised in that** the bore is a cooling bore of a component of a gas or steam turbine, in particular a blade of a gas or steam turbine, and in the flow direction the bore comprises an inlet portion, a conductor portion and a diffuser portion, and that as the bore geometry value, the length of the conductor portion predetermined as the predefined value is changed by the difference value projected in the bore direction, and/or the diameter of the cross-section of the conductor portion is changed depending on the difference value.

7. Method according to any of the preceding claims, **characterised in that** the method is performed fully automatically.

8. Method according to any of the preceding claims, **characterised in that** after completing method work steps a) to c) for production of a first bore, the method is repeated for production of a further bore or plurality of further bores in the component.

9. Boring device for performance of the method for parametric production of a bore in a component according to any of the preceding claims, **characterised in that** a measurement unit is provided for measuring an actual wall thickness of the component, and that a calculation unit is provided for performing a comparison of the measured actual wall thickness with an assumed ideal wall thickness and for determining at least one parametric bore geometry value on the basis of the comparison.

10. Boring device according to claim 9, **characterised in that** the boring unit is a laser borer.

11. Boring device according to any of claims 9 or 10, **characterised in that** the boring device also comprises a gripping and positioning unit in order to grip the component to be machined and position this, preferably fully automatically, according to the machining step to be performed.

12. Method for production of a component for use as a blade of a gas or steam turbine, wherein at least one bore of this component is produced using the method according to any of claims 1 to 8.

## Revendications

1. Procédé pour la réalisation paramétrique d'un alésage dans une pièce, pour la réalisation paramétrique d'un alésage de refroidissement (11) dans une pièce d'une turbine à gaz ou à vapeur, de préférence dans une aube (10) d'une turbine à gaz ou à vapeur, **caractérisé en ce que** le procédé comprend les étapes suivantes (21, 23, 24) :
a) mesure d'une épaisseur de paroi réelle de la pièce au niveau de l'endroit où l'alésage doit être réalisé ;
b) détermination d'au moins une valeur géométrique d'alésage paramétrique sur la base d'une comparaison de l'épaisseur de la paroi réelle mesurée avec une épaisseur de paroi idéale supposée ;
c) réalisation de l'alésage selon l'au moins une valeur géométrique de l'alésage paramétrique déterminée.

2. Procédé selon la revendication 1, **caractérisé en ce que** l'épaisseur de paroi réelle de la pièce lors de l'étape de procédé a est mesurée au moyen d'une mesure par courants de Foucault.

3. Procédé selon l'une des revendications précédentes, **caractérisé en ce que**, pour déterminer la valeur géométrique d'alésage paramétrique lors de l'étape de procédé b, une valeur différentielle est d'abord déterminée à partir d'une épaisseur de paroi idéale supposée et d'une épaisseur de paroi réelle mesurée, puis la valeur géométrique de l'alésage paramétrique est déterminée à partir d'au moins une valeur de référence en tenant compte de la valeur différentielle.

4. Procédé selon la revendication 3, **caractérisé en ce que** la valeur de référence est une valeur absolue et la valeur de référence est modifiée en fonction de la valeur différentielle.

5. Procédé selon la revendication 3, **caractérisé en ce que** la valeur de référence est une valeur relative concernant l'épaisseur de la paroi et la valeur de référence est modifiée et passe d'une valeur proportionnelle à une valeur différentielle.

6. Procédé selon l'une des revendications précédentes 3 à 5, **caractérisé en ce que** l'alésage est un alésage de refroidissement d'une pièce d'une turbine à gaz ou à vapeur, plus particulièrement une aube d'une turbine à gaz ou à vapeur, et l'alésage comprend, dans la direction d'écoulement, une partie d'entrée, une partie d'alimentation et une partie de diffusion, et **en ce que**, en tant que valeur géométrique d'alésage, la longueur de la partie d'alimentation, prédéterminée en tant que valeur de référence, est modifiée de la valeur différentielle projetée dans la direction de l'alésage et/ou le diamètre de la section transversale de la partie d'alimentation est modifiée en fonction de la valeur différentielle.

7. Procédé selon l'une des revendications précédentes, **caractérisé en ce que** le procédé est effectué de manière entièrement automatique.

8. Procédé selon l'une des revendications précédentes, **caractérisé en ce que**, après l'exécution des étapes de procédé a à c, pour réaliser un premier alésage, le procédé de réalisation d'un autre alésage ou de plusieurs autres alésages dans la pièce est répété.

9. Dispositif de perçage pour l'exécution du procédé de réalisation paramétrique d'un alésage dans une pièce selon l'une des revendications précédentes, **caractérisé en ce qu'**une unité de mesure est prévue pour mesurer une épaisseur de paroi réelle de la pièce et **en ce qu'**une unité de calcul est prévue pour comparer l'épaisseur de paroi réelle mesurée à l'épaisseur de paroi idéale supposée et pour déterminer une valeur géométrique d'alésage paramétrique sur la base de la comparaison.

10. Dispositif de perçage selon la revendication 9, **caractérisé en ce que** l'unité de perçage comprend une perceuse laser.

11. Dispositif de perçage selon l'une des revendications 9 ou 10, **caractérisé en ce que** le dispositif de perçage comprend en outre une unité de préhension et de positionnement afin de saisir la pièce à usiner et de la positionner de préférence de manière entièrement automatique selon l'étape d'usinage à exécuter.

12. Procédé de fabrication d'une pièce destinée à être utilisée en tant qu'aube d'une turbine à gaz ou à vapeur, au moins un alésage de cette pièce étant réalisé en appliquant le procédé selon l'une des revendications 1 à 8.
